# EUROPEAN PATENT APPLICATION

(11) **EP 3 384 815 A1**
(43) Date of publication of application: **10.10.2018**
(21) Application number: 17165015.3
(22) Date of filing: 05.04.2017
(51) Int. Cl.: A47J 31/40, G01F 11/46

(54) **DISPENSER OF BULK MATERIAL**

(71) Applicant: Nestec S.A., 1800 Vevey (CH)
(72) Inventor: MOREND, Joël, 1553 Châtonnaye (CH); SCORRANO, Lucio, 1400 Yverdon-les-Bains (CH); CHEVALLEY, Samuel, 1400 Yverdon-les-Bains (CH)
(74) Representative: Ducreux, Marie

(57) **Abstract**

The invention concerns a container (10) for storing, metering and dispensing bulk material, the container comprising :
- a tank (1) to store the bulk material, and
- a dispensing closure (2) to dispense the bulk material from the tank, said dispensing closure comprising an inner rotatable member (22) with at least one aperture (221) and an outer fixed member (21) with a central aperture (213) and at least one outlet aperture (211), wherein the container comprises a locking assembly (5) to lock or unlock the rotation of the inner rotatable member, said locking assembly comprising :
- a movable locking member (52), said movable locking member engaging with the central connecting means (223) of the inner rotatable member and said locking member being movable longitudinally along the central axis between a lower locked position and an upper unlocked position, and
- a fixed locking member (51), said fixed locking member cooperating with/ being designed for receiving the movable locking member when said movable locking member is positioned in the lower locked position.

## Description

### Field of the invention

The present invention relates to a container and a system for dispensing a bulk material, preferably a powder, , particularly for the preparation of beverages by dilution of metered doses of soluble beverage powder.

### Background of the invention

Beverage preparation machines designed for preparing beverages are well-known and commonplace in both domestic and commercial environments. These machines are generally configured for preparing cold or hot beverages on-demand such as in particular coffee or tea beverages in case the machine comprises a heating unit, or chilled drinks such as in particular soft drinks or water. In the latter case, the machine may be equipped with a cooling unit.
A known principle in this field is the preparation of a beverage by means of a container containing a beverage ingredient, usually a powder, said container being connectable to the beverage preparation machine. Portioned amounts of beverage ingredient can be dispensed from the container during the beverage preparation process into a cup or into a mixing chamber of the machine. In the cup or the mixing chamber, a beverage is prepared by mixing the dosed amount of ingredients with a diluent such as water.

EP-A1-3 028 609 describes a container for storing and dispensing a bulk material, the container comprising :
- a tank, and
- a dispenser for dispensing the product from the tank comprising an inner rotatable disc member with at least one aperture, and an outer fixed disc member with a central aperture and at least one outlet aperture therein,
wherein the inner disc member is configured for being selectively rotatable with respect to the outer disc member such that at least in one rotational position of the inner disc member, the at least one aperture of the inner disc member overlaps with the at least one outlet aperture of the outer disc member for enabling the dispensing of the product from the container.
This container can be positioned in the docking unit of a dosing machine configured for dispensing a dose of bulk material stored in the container. The machine comprises a rotary shaft configured to engage and selectively rotate the inner rotatable disc member of the container when the container is connected to the machine.

With this type of system, it is possible to use several containers storing different beverage powders (for example a coffee powder and a decaffeinated coffee powder) with the same dosing machine in order to provide variety of beverages. As a result, each container can be removed and manipulated by the operator outside of the machine.
In a particular embodiment, such a container can be configured to be dismountable and non disposable : in that case, the dispenser can be separated from the tank and the tank can be refilled before attaching the dispenser back to the tank. These operations are performed out of the dosing machine.
When the container is removed from the machine, it has been observed that the operator may inadvertently rotate the inner rotatable disc member. As a result, an aperture of the inner rotatable disc member can partially overlap the outlet aperture of the outlet disc member and bulk material may flow therethrough producing dirtiness around and inside the dosing machine.
When the container is non disposable, it can be cleaned occasionally. If the operator has dismantled the container and in particular has separated the inner disc member from the outer disc member, it is essential that the inner disc member is correctly positioned relatively to the outer disc member during the reassembly of the container. Most essentially, the inner disc member must be positioned so that it closes the outlet aperture of the outer disc, otherwise bulk material will flow therethrough before the container is connected to the machine.

An object of the invention is to address at least some of the drawbacks of the prior art containers when they are removed from the machine or when they are disassembled, cleaned and reassembled, in particular to prevent any leak of bulk material during these operations.

### Summary of the invention

In a first aspect of the invention, there is provided a container for storing, metering and dispensing bulk material, the container comprising :
- a tank to store the bulk material, and
- a dispensing closure to dispense the bulk material from the tank, said dispensing closure comprising :
   . an inner rotatable member with at least one aperture, said inner rotatable member being rotatable around a central axis (XX) and said inner rotatable member comprising central connecting means designed to removably engage with a rotating shaft extending along the central axis (XX),
   . an outer fixed member with a central aperture and at least one outlet aperture therein, wherein the inner rotatable member is configured for being selectively rotatable with respect to the outer fixed member such that at least in one rotational position of the inner member, the at least one aperture of the inner member overlaps with the at least one outlet aperture of the outer fixed member for enabling the dispensing of the product from the container
   wherein the container comprises a locking assembly to lock or unlock the rotation of the inner rotatable member, said locking assembly comprising :
- a movable locking member, said movable locking member engaging with the central connecting means of the inner rotatable member and said movable locking member being movable longitudinally along the central axis (XX) between a lower locked position and an upper unlocked position, and
- a fixed locking member, said fixed locking member cooperating with the movable locking member when said movable locking member is positioned in the lower locked position so that the rotation of the movable locking member (52) around the central axis (XX) is prevented.

The container is configured for storing bulk material like a powder, free flowing particles, pellets, granulates, granules or grains. Preferably the bulk material is a beverage ingredient like a powder of instant coffee, milk, cacao or instant tea or like pellets of such powders or coffee beans. In addition to storing such a bulk material, the container allows easy unloading of a dose of the material from the container in order to deliver said dose to a beverage preparation machine once a beverage is ordered.

The container of the present invention comprises a tank ; its function is to be filled with and to store the bulk material. The tank usually comprises a lateral side wall, a top wall and an opened bottom. Its bottom is closed by the dispensing closure.

Normally any global shape of tank could be used. Yet in order to facilitate the cleaning and drying of the tank by an operator, it is generally preferred to design the tank with rounded walls devoid of angular parts.
In one embodiment, the lateral side wall of the tank can present a globally cylindrical shape presenting a round section.

The tank can be made of a transparent material, such as a transparent plastic. Such a transparent part enables the control of the level of the remaining bulk material inside the container when this one is used.

The opened bottom of the tank is closed by the dispensing closure. This dispensing closure simultaneously closes and, on demand, doses and dispenses a dose of bulk material from the tank.
This dispensing closure comprises an outer fixed member and an inner rotatable member. Generally at least a part of these members are plates, sheets or discs able to slide one along the other.
The outer fixed member is placed outside the container compared to the other inner member. This outer fixed member is attached to the bottom of the tank and, once attached, remains immobile in respect of the tank.
The outer fixed member comprises at least one outlet aperture through which the bulk material is dispensed. This aperture is positioned between the centre of the member and its lateral edge. According to one preferred embodiment, the outer fixed member comprises one outlet aperture only. As a result, this single aperture is able to cooperate with a precise zone of dispense of the bulk material. The surface of said at least one aperture defines the smallest dose that can be metered and dispensed from the container. Multiples of this smallest dose can be dispensed according to the total angular rotation of the inner rotatable member. Fine tuning of dosing can be achieved.
The outer fixed member usually presents another opening in its centre so that an external rotary shaft of a motor can go through said opening and freely cooperate with the inner rotatable member. Accordingly, the inner member can be rotated while the outer member remains immobile.
In one preferred embodiment, the outer fixed member is attached to the tank in a removable manner. Accordingly, the container can be dismantled by separating the dispensing closure from the tank. Dismantling enables cleaning and/or refilling of the tank.

The dispensing closure comprises an inner rotatable member with at least one aperture. Preferably the inner rotatable member comprises several apertures, said apertures being regularly angularly spaced and presenting the same internal shape. Having several apertures enables dosing of an important quantity of bulk material with a small angular rotation of the inner rotatable member and, as a result, in a short time.
The inner rotatable member is placed inside the container compared to the other outer fixed member.
The inner member presents a central connecting means configured for cooperating with a rotary shaft external to the container. This means is preferably placed at the centre of the inner member.
The inner member is configured for being selectively rotatable with respect to the outer member such that at least in one rotational dispensing position of the inner member, the at least one aperture of the inner member overlaps with the at least one outlet aperture of the outer member to enable the dispensing of the bulk material from the container. The dispensing happens by gravity fall.

According to one preferred embodiment, the at least one aperture in the inner rotatable member is an indentation in the lateral side edge of the inner member.
As a consequence, the space defining the aperture is opened on one part of its outline and, once the inner rotatable member is dismounted from the other parts of the container, it is easy for an operator to introduce a cleaning tissue inside the aperture to get an efficient cleaning.
Preferably the indentation has an outline presenting soft curves. Accordingly powder is prevented from remaining blocked in acute angles.
As mentioned above, the volume of the indentation between its own internal edge and the lateral side wall of the tank defines the minimal dose of bulk material that can be dispensed from the container.

According to the preferred embodiment, the container is non-disposable. It can be refilled with bulk material.
According to the preferred variant, the container comprises elements enabling the removable connection of the tank and the dispensing closure. Accordingly, the container can be refilled by disconnecting the tank from the dispensing closure, filling the tank with bulk material and then reassembling the tank and the dispensing closure. These removably connecting elements can be cooperating cams and cam tracks, screw threads, bayonet type elements or any other equivalent means provided on the surfaces of the tank and of the outer fixed member of the dispensing closure.
According to a less preferred variant, the tank comprises a refillable opening. Accordingly, the tank can be refilled without disassembling the tank and the dispensing closure, and even without removing the container from the beverage preparation system it is assembled to. The refillable opening can be any opening provided in the wall of the tank. It is usually closed by a removable cover. For example, the tank can be refilled through the opening by a refill cartridge of bulk material such as disclosed in WO 2009/000810.

According to another embodiment, the container can be disposable.

The container comprises a locking assembly to lock or unlock the rotation of the inner rotatable member. Usually, the locking assembly is part of the dispensing closure.

First, this locking assembly comprises a movable locking member.
This movable locking member is always engaged with the central connecting means of the inner rotatable member. This engagement is such that, when the central connecting means rotates, then the movable locking member follows the central connecting means and rotates too. The central connecting means carries the movable locking member.
According to one preferred embodiment, the central connecting means of the inner rotatable member comprises at least two pins extending downwardly, and the movable locking member comprises at least two traversing holes, the at least two pins of the inner rotatable member being engaged in said traversing holes. As a result, the movable locking member is always engaged with the central connecting means of the inner rotatable member. Preferably the central connecting means comprises four pins and the movable locking member comprises four traversing holes.
Moreover, the movable locking member is movable longitudinally along the central axis of the inner rotatable member between a lower locked position and an upper unlocked position. Preferably the movable locking member is movable up and down between these two positions according to a translation movement along the central axis of rotation of the inner rotatable member.
When the movable locking member is in the lower locked position, the rotation of said member is locked and not possible. Accordingly, in that case, since the movable locking member is engaged with the central connecting means of the inner rotatable member, then the rotation of said inner rotatable member is locked and not possible too.
When the movable locking member is in the upper unlocked position, said locking member is free to be rotated. Accordingly, in that case, since the movable locking member is engaged with the central connecting means of the inner rotatable member, then the rotation of said inner rotatable member is possible too.

Secondly this locking assembly comprises a fixed locking member. This fixed locking member is designed for cooperating with the movable locking member when said movable locking member is positioned in the lower locked position. The cooperation between both members prevent the rotation of the movable locking member around the central axis of rotation of the inner rotatable member. The fixed locking member and the movable locking member engage together and the fixed locking member fix the movable locking member against rotation. Accordingly, when the movable locking member cooperates with the fixed locking member, it becomes fixed too in rotation. As a result, the container presents a locking assembly either preventing or enabling the rotation of the inner rotatable member depending on the position of the movable locking member.

The upper or lower position of the locking member is directly linked to the cooperation of the container with a rotating shaft. Cooperation with such a shaft induces displacement of the movable locking member in its upper position whereas absence of cooperation (that is when the container is removed from the shaft) induces displacement of the movable locking member in its lower position.

Preferably, the movable locking member is spring biased against the fixed locking member. Consequently, when the container is not in operating situation and is not connected to a rotatable shaft, the movable locking member is pushed by the spring against the fixed locking member and positioned in its lower locked position. This type of situation happens when the operator removes the container from the shaft and manipulates the container for cleaning, refilling or for replacing a container by another in the dispensing machine. As a result, the inner rotatable member is not able to rotate and there is no risk that bulk material may escape from the outlet aperture.

Preferably, the fixed locking member of the locking assembly is attached to the outer fixed member of the dispensing closure

Preferably, the outer fixed member comprises a central cavity, said cavity extending inside the tank volume of the tank and the locking assembly being hold inside said cavity.
Preferably, the inner rotatable member comprises a central cavity, said cavity extending inside the tank volume of the tank and wherein the shape of the central cavity of the inner rotatable member and the shape of the central cavity of the outer fixed member are conformal, said shapes being arranged for engaging with respect to each other but remaining movable one to each other.
These cavities and their conformal shapes create a barrier for fines. Accordingly, during rotation, fines from the bulk material can slide between the upper surface of the outer fixed member and the lower surface of the inner member but cannot further escape through the central aperture due to the barrier.
Preferably the conformal parts of the inner fixed member and of the outer rotatable member are arranged for engaging along the smallest surfaces as possible in order to avoid the creation of powder fines further to friction in between surfaces. The surfaces of contact are preferably around the at least one aperture in the inner rotatable disc.

Preferably the upper central surface of the inner rotatable member presents the shape of a cone, said cone rising within the internal volume of the tank and guiding the bulk material to the lateral side edge of the rotatable inner member.
Accordingly as the level of bulk material decreases in the tank, bulk material is urged to slide along the slope of the cone to the lateral side of the tank where it is trapped in the at least one aperture of the inner rotatable member when said member rotates.
According to the preferred embodiment, this cone is centered above the upper surface of the cavity of the inner rotatable member

According to one preferred embodiment,
- the movable locking member presents an external shape, and
- the fixed locking member comprises an area for receiving the movable locking member in its lower locked position, said area presenting an internal shape complementary to the external shape of the movable locking member and said complementary internal and external shapes being designed to fix the movable locking member in the lower locked position in at least one predefined angular position.
Generally, the shapes cooperate with each other in order to orientate the rotatable inner member according to at least one angular position, the inner rotatable member closing the outlet aperture of the outer fixed member in said at least one angular position.
Generally the external shape of the movable locking member presents bumps or slots and the internal shape of the receiving area of the fixed locking member presents respectively complementary slots or bumps.

In a second aspect, there is provided a system for dispensing bulk material, said system comprising a container such as described above and an apparatus for dispensing a dose of bulk material from the container, said apparatus comprising :
- a receiving area to receive the container in the apparatus,
- a dispensing area to dispense a dose of bulk material.
- a rotatable shaft to rotate the inner rotatable member of the container, the end of said shaft being designed to cooperate with the central connecting means of the inner rotatable member of the container, and
- a motor to actuate the rotatable shaft,
wherein the end of the rotatable shaft of the apparatus of the system is designed to cooperate with the movable locking member and move up said movable locking member to its upper unlocked position when the container is received in the receiving area.
As disclosed earlier

According to one preferred embodiment of the system :
- the central connecting means of the inner rotatable member comprises at least two pins extending downwardly, and
- the movable locking member comprises at least two traversing holes, the at least two pins of the inner rotatable member being engaged in said traversing holes, and
- the end of the rotatable shaft of the apparatus of the system presents a cross shape for engaging the at least two pins of the central connecting means.

According to one embodiment, the system is configured for preparing a beverage, and
- the container comprises a soluble beverage ingredient, and
- the apparatus comprises a beverage preparation chamber connected to at least one liquid supply, the dispensing area comprising a beverage preparation chamber so that a dose of soluble beverage ingredient is dispensed in the chamber.

According to another embodiment, the system is configured for preparing a beverage, and
- the container comprises a soluble beverage powder, and
- the dispensing area of the apparatus is configured for supporting a drinking container, and dispensing soluble beverage powder in a drinking container,
- the apparatus comprises a liquid supply and said liquid supply is configured for dispensing liquid in a drinking container at the dispensing area.

Usually the liquid supply of the different systems supplies water.

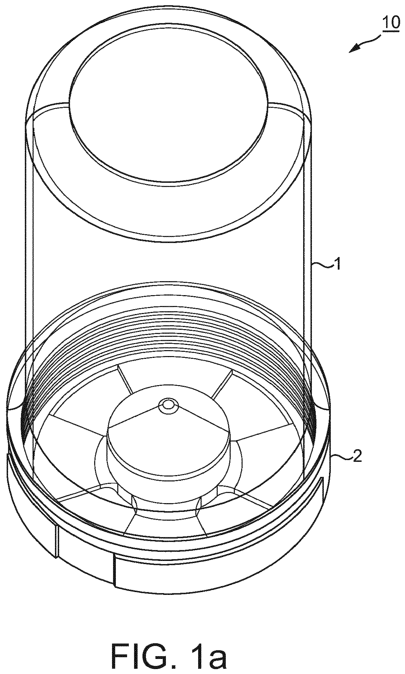

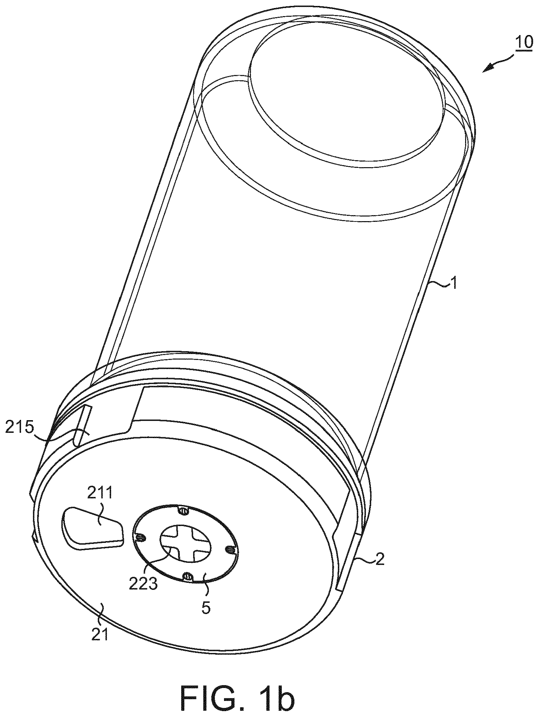

In the present application the terms "inner", "outer", "upper", "lower", "bottom" and "lateral" are used to describe the relational positioning of features of the invention. These terms should be understood to refer to the container in its normal orientation when positioned in a beverage preparation dispenser for the production of a beverage as shown in the figures 1 a, 3, 5, 10 and 11.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figures 1 a is a top view of a container according to the invention,
- Figure 1b is a bottom view of the container of Figure 1 a,
- Figure 2a is a view of the tank of the container of Figures 1 a and 1 b,
- Figure 2b is a view of the dispensing closure of the container of Figures 1 a and 1 b,
- Figure 3 is a view of a system of the container and an apparatus for dispensing bulk material according to the invention,
- Figure 4 is a view of the apparatus for dispensing bulk material from which the container has been removed,
- Figure 5 is an exploded view of the closure member 2,
- Figures 6a and 6b are top and bottom views of the outer fixed member of the container according to the preferred embodiment,
- Figures 7a and 7b are top and bottom views of the movable locking member according to the preferred embodiment,
- Figure 8 is a view of the fixed locking member of the locking assembly of the container according to the preferred embodiment,
- Figure 10 is a longitudinal cross section of the container in its locked status,
- Figure 11 is a longitudinal cross section of the container docked in the apparatus in its unlocked status,
- Figures 12 and 13 are schematic views of the container positioned in the dosing and docking units of beverage preparation systems.

### Detailed description of the drawings

**Figure 1** illustrates
**Figures 1a** **and** **1b** illustrate a container 10 according to the invention. The container comprises a tank 1 defining an interior volume for storing a bulk material. In the illustrated embodiment, the tank is made of transparent material. Accordingly, the level of bulk material can be visually controlled. The tank 1 presents a globally cylindrical shape, yet other shapes can be implemented.
The bottom of the tank is closed by a dispensing closure 2. This dispensing closure forms the bottom of the tank and enables the dispensing of bulk material. The dispensing closure 2 comprises an outer member 21 with one outlet aperture 211 therein and enabling the dispensing of bulk material therethrough. During the normal dispensing operation of the container, this outer member 21 is fixed relatively to the tank 1.

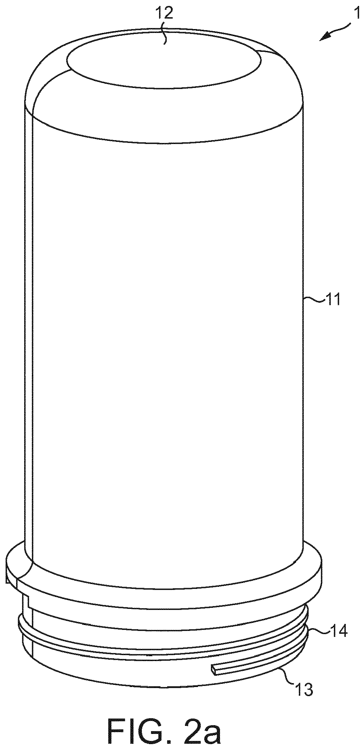

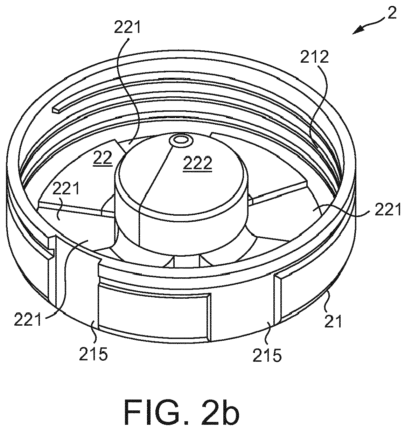

As illustrated in **Figures 2a** **and** **2b**, preferably, the tank 1 and the dispensing closure are attached one to the other by removably connecting means, respectively a cam 14 close to the bottom 13 of the tank and a corresponding cam track 212 at the outer member 21 of the dispensing closure. Although the container is illustrated in a dismountable configuration (this configuration presenting the advantage of enabling the refilling of the container), the container of the present invention can also be non dismountable and disposable once it is empty. Either dismountable or not, the tank and the dispensing closure present the same following features except the presence of dismountable attachments.
As illustrated in **Figure 2a**, the tank presents lateral and top walls 11, 12 and is opened at its bottom 13.
As illustrated in **Figure 2b**, the dispensing closure 2 comprises an outer member 21. The dispensing member 2 comprises also an inner member 22 with at least one aperture 221 (exactly four apertures as illustrated in Figure 1a and 2b). This inner member 22 is positioned above the outer fixed member 21 inside the volume of the container compared to the outer member. This inner member is able to be rotated along the upper surface of the outer member. The apertures 221 in the inner member 22 are designed so that, when the inner member 22 rotates with respect to the outer member 21, the apertures 221 of the inner member successively overlap with the outlet aperture 211 of the outer member to enable the dispensing of the bulk material from the container. The inner member 222 is rotated by means of a rotating shaft: central connecting means 223 at the bottom of the inner member are able to be engaged by the end of said rotating shaft. Figure 1b illustrates this central connecting means 223 and the presence of a locking assembly 5 to lock or unlock the rotation of the inner member.

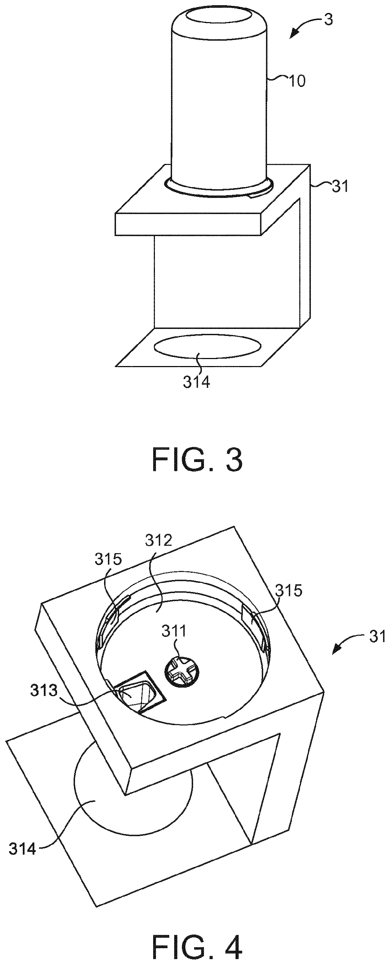

**Figure 3** illustrates a system 3 according to the invention comprising a container 10 and an apparatus 31 the container 10 is connectable to. The apparatus 31 doses and dispenses bulk material from the container 10 in a dispensing area 314 where a receptacle can be positioned. The apparatus is schematically represented and usually comprises a motor for actuating a rotating shaft in response to an order of the operator, for example through a button.

**Figure 4** illustrates the receiving area 312 of the apparatus. An aperture 313 is present to guide the dose of bulk material dispensed out of the outlet aperture of the container to the dispensing area 314. The end of a rotating shaft emerges form the surface of the receiving area in order to connect with the central connecting means of the inner rotating member of the container. The receiving area comprises orienting elements 315 to connect with corresponding orienting elements 215 (Figure 1b, 2b) at the external surface of the outer member of the container so as to orient the outlet aperture 211 of the container to the aperture 313 of the apparatus. In the illustrated embodiment, these orienting elements are bumps and slots. Yet any other orienting means can be used such as any corresponding shapes.

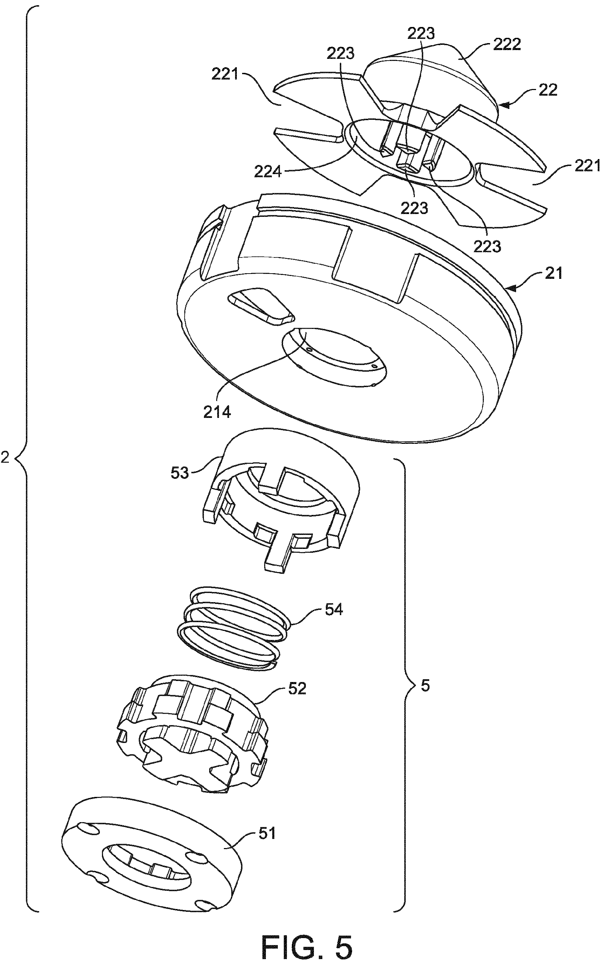

**Figure 5** is an exploded view of the closure member 2 and illustrates the different parts of the locking assembly 5.
The inner rotating member 22 is positioned at the top of the closure member. The inner member comprises four apertures 221 presenting the same shape and regularly angularly positioned. The apertures 221 are indentations which means that the apertures have no external lateral walls. The apertures cross and overlap the lateral edge of the inner rotatable member. This design enables a very easy cleaning. Yet according to a less preferred embodiment (not illustrated), the apertures can be designed with lateral walls along their full circumference.
The upper surface of the inner member presents the shape of a cone 222, said cone rising at the centre of the member within the internal volume of the tank. Accordingly, this design guides the bulk material to the lateral side edge of the rotatable inner member, in particular inside the apertures 221. When the inner member 22 rotates, bulk material laying on its lateral side edge is driven in direction of the outlet aperture 211.
The inner member 22 presents a central cavity 224 extending upwardly from its lower surface in direction of the internal volume of the tank and under the cone 222. Accordingly the cone is partially empty. Inside this cavity 224, central connecting means 223 extend downwardly in order to enable engagement with the end of the rotating shaft of the apparatus. In the preferred illustrated embodiment, the central connecting means comprises four pins extending downwardly.
The outer member 21 is positioned under the inner member 21. The outer member 21 presents a central cavity 214 extending upwardly from its lower surface in direction of the internal volume of the tank. Preferably, this cavity 214 of the outer member is conformal to and fits tightly inside the cavity 224 of the inner member and accordingly forms a barrier for material, especially powder, contained in the container. The lower surface of the cavity of the outer rotatable member slides along the upper surface of the cavity of the inner fixed member slides during rotation and dosing. Accordingly, during rotation, fines from the bulk material can slide between the upper surface of the outer fixed disc and the lower surface of the inner disc but cannot further escape through the central aperture due to the barrier. The fitment is tight but does not prevent the free rotating movement of the inner member while the outer member remains immobile.
Once assembled together, the inner rotatable member 22 is simply positioned above the outer fixed member 21, the central cavity 224 of the inner member covering the central cavity 214 of the outer fixed member and the connections means 223 extending through the aperture 213. Once assembled, the inner member is free to rotate and can be easily disassembled by pulling it up.

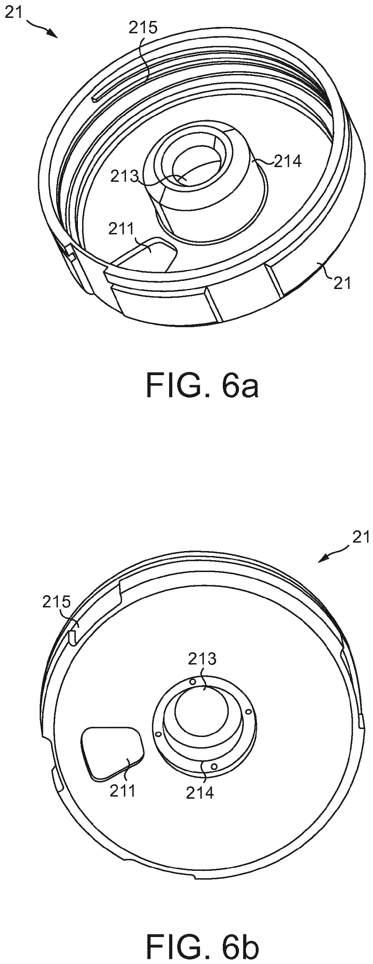

As illustrated in **Figures 6a and 6b**, the top of the cavity 214 in the outer member comprises an aperture 213. When the inner and outer members 21, 22 are assembled, the central connecting means, specifically the pins 223, of the inner member extends through this aperture 213.

The cavity 214 in the outer member holds the locking assembly 5 of the dispensing closure. The locking assembly 5 comprises a movable locking member 52 and a fixed locking member 51.

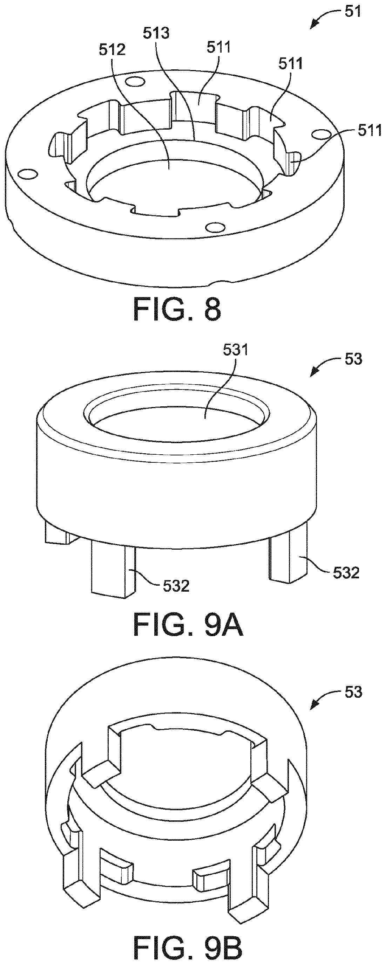

In the illustrated embodiment, the fixed locking member 51 is attached at the bottom of the cavity 214 of the outer fixed member. This member 51 is permanently attached to the outer fixed member 21 and, as a result, remains immobile. Attachment can be realised by any manner, for example with four screws. As illustrated in **Figure 8**, this member presents an internal recess 513. This recess is designed to receive the movable locking member 52. The surface of the internal recess presents slots 511.
Moreover, the fixed locking member 51 comprises a central opening 512. Due to this opening 512, connection between the end of the rotating shaft and the central connecting means 223 of the inner rotating member is possible.

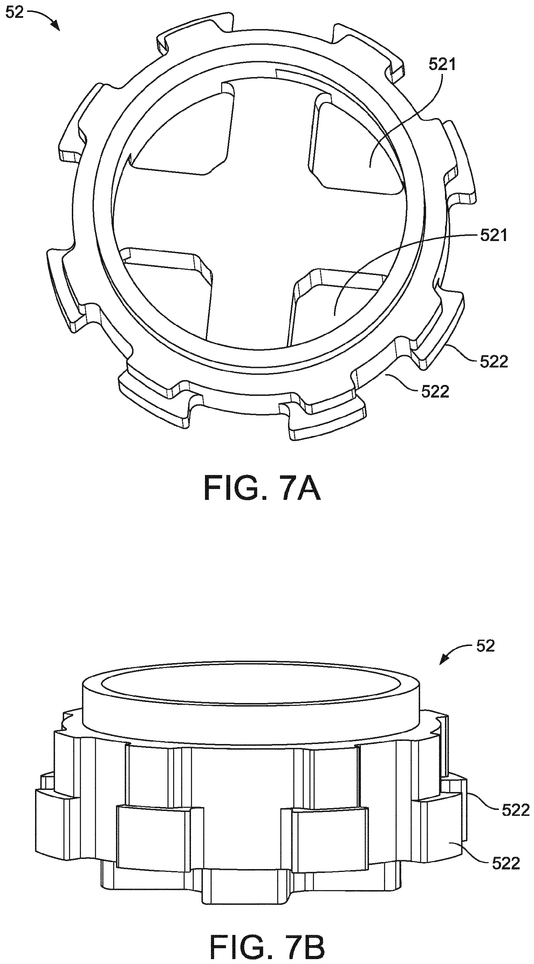

In the illustrated embodiment of **Figures 7a**, **7b**, the movable locking member 52 presents four holes 521. These holes are designed so that the four pins 223 forming the central connecting means of the inner rotatable member are engaged within. As a result, the inner rotatable member and the movable locking member rotate together only. The outer surface of the movable locking member presents bumps 522. These bumps present shapes designed to cooperate and engage with the corresponding slots 511 in the internal surface of the internal recess of the fixed locking member.
The locking assembly 5 comprises a spring 54 and a spring holder 53 configured for spring biasing the movable locking member 52 against the fixed locking member 51 and illustrated in **Figures 9a and 9b**.
Accordingly, once the locking assembly 5 is assembled, the spring holder 53 is received in the cavity 214 of the outer fixed member, the spring 54 is introduced in the spring holder 53, the movable locking member 52 is urged against the spring, the fixed locking member 51 is positioned against movable locking member 52 so that their bumps and slots 522, 511 fit together and finally the fixed locking member 51 is attached to the outer fixed member 21.

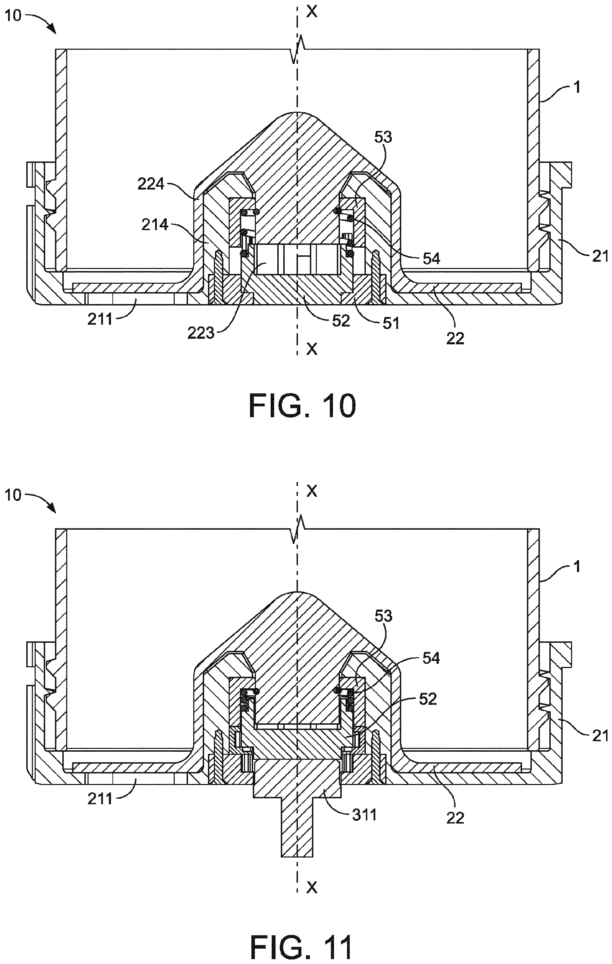

**Figure 10** provides a cross section view of the container 10 comprising this above described locking assembly and illustrating the cooperation of the different elements. The movable locking member 52 is urged by spring 54 to its lower position and is received in the internal recess of the fixed locking member. Due to the cooperation between the bumps and slots of the locking members, the movable locking member 52 is not able to rotate along the axis XX and, as a result, the inner rotatable member 22 is not able to rotate either due to the cooperation of the four pins 223 with the four holes 521 of the movable locking member.
During manufacturing, the assembly of the container is set so that the outlet aperture 211 of the container is originally closed by the inner rotatable member 22. This guarantees that no bulk material can escape from this aperture the first time it is filled. This result is obtained by a correct positioning of the inner member rotatable 22, precisely the positions of the slots 511 of the fixed locking member, since these slots define the position of the movable locking member and the inner rotatable member engaged therein relatively to the outlet aperture 211 when the container is out of the apparatus.
This position of the slots 511 of the fixed locking member also guarantees that the inner rotatable member 22 can be correctly assembled to the dispensing closure after dismantling for example after cleaning of the container by an operator.

**Figure 11** provides a cross section view of the container 10 comprising this above described locking assembly 5 and illustrating the cooperation of the different elements when the container cooperates with a shaft 311 in order to dispense bulk material.
During the cooperation of the end of the shaft with the central connection means, the end of the shaft pushes the movable locking member 52 upward against the force of the spring to the illustrated upper position. In this position, the movable locking member 52 is no more receive inside the fixed locking member 51, their bumps and recesses are not engaged, and accordingly the movable locking member 52 is not blocked any longer. The rotation of the shaft induces the rotation of the inner rotatable member 22 and the movable locking member 52. The spring and the spring holder are induced to rotate too.
The inner rotatable member 22 is rotated until the required dose of bulk material is dispensed. The docking and dosing apparatus is set to stop the rotation of the shaft when the inner rotatable member 22 closes the outlet aperture 211 to avoid any leak of material when the container 10 is removed from the apparatus.
When the container 10 is removed, the movable locking member 52 locks the rotation of the rotatable inner member 22. This member cannot rotate and there is no risk that the operator rotates the central connection means 223 of the container by error.

As illustrated in Figure 4, the end of the shaft presents the shape of a cross designed to cooperate with the central connecting means 223 of the inner rotatable member that is the four pins here.

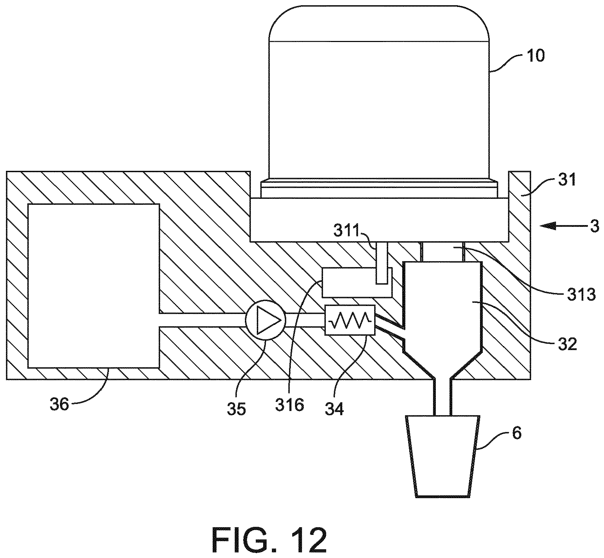

**Figure 12** schematically depicts a system 3 according to the invention comprising a container 10 and an apparatus 31 similar to the one described in Figures 3 and 4 except that the apparatus 31 comprises also a beverage preparation chamber 32. As illustrated the chamber 32 can be positioned at the dispensing area so that during dispensing of bulk material from the container 10, bulk material flows through said aperture in the chamber.
The apparatus comprises a liquid supply configured to introduce a diluent, preferably water, in the chamber 32. The liquid supply can comprise a liquid tank 36, a pump 35 and a heater 34 and/or a cooler (not represented).
During beverage preparation, a predefined amount of bulk material is first dispensed into the chamber 32 from the container 10. This is obtained by rotating the shaft 311 and dosing the required dose of bulk material that falls into mixing chamber. A diluent such as water is then provided from the tank 36 to the chamber 32. The resulting liquid beverage is then discharged from an outlet of the mixing chamber 32 into a receptacle 6.
The container can be removed from the apparatus 31 with the guarantee that the locking assembly prevents the rotation of the inner rotatable member and that no bulk material can escape from the container. When the container is placed again in the apparatus, the movable locking member of the locking assembly is automatically moved up, enabling the rotation and the use of the container to dispense bulk material.

Although the invention has been described with reference to the above illustrated embodiments, it will be appreciated that the invention as claimed is not limited in any way by these illustrated embodiments.
Variations and modifications may be made without departing from the scope of the invention as defined in the claims. Furthermore, where known equivalents exist to specific features, such equivalents are incorporated as if specifically referred in this specification.
As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| container | 10 |
| tank | 1 |
| lateral side wall | 11 |
| top wall | 12 |
| bottom | 13 |
| connecting element | 14 |
| dispensing closure | 2 |
| outer fixed member | 21 |
| outlet aperture | 211 |
| connecting element | 212 |
| central aperture | 213 |
| cavity | 214 |
| orienting element | 215 |
| inner rotatable member | 22 |
| dosing aperture | 221 |
| cone | 222 |
| central connecting means | 223 |
| cavity | 224 |
| system | 3 |
| docking and dosing apparatus | 31 |
| shaft | 311 |
| receiving area | 312 |
| bottom aperture | 313 |
| dispensing area | 314 |
| orienting element | 315 |
| motor | 316 |
| locking assembly | 5 |
| fixed locking member | 51 |
| slots | 511 |
| central aperture | 512 |
| internal recess | 513 |
| movable locking member | 52 |
| holes | 521 |
| bumps | 522 |
| spring holder | 53 |
| central aperture | 531 |
| pin | 532 |
| spring | 54 |
| beverage preparation chamber | 32 |
| heater | 34 |
| pump | 35 |
| liquid tank | 36 |
| receptacle | 6 |

## Claims

1. A container (10) for storing, metering and dispensing bulk material, the container comprising :
- a tank (1) to store the bulk material, and
- a dispensing closure (2) to dispense the bulk material from the tank, said dispensing closure comprising :
. an inner rotatable member (22) with at least one aperture (221), said inner rotatable member being rotatable around a central axis (XX) and said inner rotatable member comprising central connecting means (223) designed to removably engage with a rotating shaft extending along the central axis (XX),
. an outer fixed member (21) with a central aperture (213) and at least one outlet aperture (211) therein,
wherein the inner rotatable member (22) is configured for being selectively rotatable with respect to the outer fixed member (21) such that at least in one rotational position of the inner member, the at least one aperture (221) of the inner member overlaps with the at least one outlet aperture (211) of the outer fixed member for enabling the dispensing of the product from the container
wherein the container comprises a locking assembly (5) to lock or unlock the rotation of the inner rotatable member, said locking assembly comprising :
- a movable locking member (52), said movable locking member engaging with the central connecting means (23) of the inner rotatable member and said movable locking member being movable longitudinally along the central axis (XX) between a lower locked position and an upper unlocked position, and
- a fixed locking member (51), said fixed locking member cooperating with the movable locking member (52) when said movable locking member is positioned in the lower locked position so that the rotation of the movable locking member (52) around the central axis (XX) is prevented.

2. A container according to any one of the precedent claims, wherein the central connecting means (223) of the inner rotatable member comprises at least two pins extending downwardly and the movable locking member (52) comprises at least two traversing holes, the at least two pins of the inner rotatable member being engaged in the traversing holes.

3. A container according to Claim 1, wherein the movable locking member (52) is spring biased against the fixed locking member (51).

4. A container according to Claim 1 or 2, wherein the fixed locking member (51) of the locking assembly is attached to the outer fixed member (21).

5. A container according to any one of the precedent claims, wherein the outer fixed member (21) comprises a central cavity (214), said cavity extending inside the tank volume of the tank and the locking assembly (5) being hold inside said cavity.

6. A container according to the precedent claim, wherein the inner rotatable member (22) comprises a central cavity (224), said cavity extending inside the tank volume of the tank and wherein the shape of the central cavity of the inner rotatable member and the shape of the central cavity of the outer fixed member are conformal, said shapes being arranged for engaging with respect to each other but remaining movable one to each other.

7. A container according to any one of the precedent claims, wherein the upper surface of the inner rotatable member presents the shape of a cone (222), said cone rising within the internal volume of the tank and guiding the bulk material to the lateral side edge of the inner rotatable member

8. A container according to any one of the precedent claims, wherein :
- the movable locking member presents an external shape, and
- the fixed locking member (51) comprises an internal recess (513) for receiving the movable locking member in its lower locked position, said recess presenting an internal shape complementary to the external shape of the movable locking member and said complementary internal and external shapes being designed to fix the movable locking member in the lower locked position in at least one predefined angular position.

9. A container according to the precedent claim, wherein the external and internal shapes cooperate with each other in order to orientate the rotatable inner member (22) according to at least one angular position, the inner rotatable member closing the outlet aperture (211) of the outer fixed member in said at least one angular position.

10. A container according to Claim 8 or 9, wherein the external shape of the movable locking member presents bumps or slots (522) and the internal shape of the receiving area of the fixed locking member presents respectively complementary slots or bumps (511).

11. A container according to any one of the precedent claims, wherein said container is refillable.

12. A system (3) for dispensing bulk material, said system comprising a container (10) according to Claim 1 and an apparatus (31) for dispensing a dose of bulk material from the container, said apparatus comprising :
- a receiving area (312) to receive the container in the apparatus,
- a dispensing area (314) to dispense a dose of bulk material.
- a rotatable shaft (311) to rotate the inner rotatable member (22) of the container, the end of said shaft being designed to cooperate with the central connecting means (223) of the inner rotatable member of the container, and
. a motor to actuate the rotatable shaft (311),
wherein the end of the rotatable shaft of the apparatus of the system is designed to cooperate with the movable locking member and move up said movable locking member to its upper unlocked position when the container is received in the receiving area.

13. A system according to the precedent claim, wherein :
- the central connecting means (223) of the inner rotatable member comprises at least two pins extending downwardly, and
- the movable locking member (52) comprises at least two traversing holes, the at least two pins of the inner rotatable member being engaged in said traversing holes, and
- the end of the rotatable shaft of the apparatus of the system presents a cross shape for engaging the at least two pins of the central connecting means.

14. A system according to Claim 12 or 13 for preparing a beverage, wherein :
- the container (10) comprises a soluble beverage ingredient, and
- the apparatus (31) comprises a beverage preparation chamber (32) connected to at least one liquid supply, the dispensing area (314) comprising said beverage preparation chamber so that a dose of soluble beverage ingredient is dispensed in the chamber.

15. A system according to Claim 12 or 13 for preparing a beverage, wherein :
- the container (10) comprises a soluble beverage powder, and
- the dispensing area (314) of the apparatus is configured for supporting a drinking container, and dispensing soluble beverage powder in a drinking container,
- the apparatus (31) comprises a liquid supply and said liquid supply is configured for dispensing liquid in a drinking container at the dispensing area.
